(19) Europäisches Patentamt
European Patent Office
Office européen des brevets

(11) **EP 4 492 660 A1**

(12) **EUROPÄISCHE PATENTANMELDUNG**

(43) Veröffentlichungstag:
    **15.01.2025  Patentblatt 2025/03**

(21) Anmeldenummer: 24187675.4

(22) Anmeldetag: **10.07.2024**

(51) Internationale Patentklassifikation (IPC):
    **H02M 1/00** (2006.01)     **H02M 1/08** (2006.01)
    **H02M 3/00** (2006.01)     **H02J 50/12** (2016.01)
    **H02M 3/335** (2006.01)

(52) Gemeinsame Patentklassifikation (CPC):
    **H02M 3/01; H02J 50/12; H02M 1/0006;**
    **H02M 1/0064; H02M 1/08; H02M 3/335;**
    H02M 1/342; H02M 1/346

(84) Benannte Vertragsstaaten:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Benannte Erstreckungsstaaten:
    **BA**
    Benannte Validierungsstaaten:
    **GE KH MA MD TN**

(30) Priorität:  **11.07.2023   DE 102023206592**

(71) Anmelder: **Fraunhofer-Gesellschaft zur**
    **Förderung**
    **der angewandten Forschung e.V.**
    **80686 München (DE)**

(72) Erfinder:
    • **HOENE, Eckart**
      **13355 Berlin (DE)**
    • **SEIDENSTÜCKER, Dominik**
      **13355 Berlin (DE)**

(74) Vertreter: **Stöckeler, Ferdinand et al**
    **Schoppe, Zimmermann, Stöckeler**
    **Zinkler, Schenk & Partner mbB**
    **Patentanwälte**
    **Radlkoferstrasse 2**
    **81373 München (DE)**

(54) **GLEICHSPANNUNGSVERSORGUNGSEINRICHTUNG, LEISTUNGSHALBLEITERSCHALTUNG UND LEISTUNGSELEKTRONISCHE SCHALTUNG**

(57)    Die Erfindung betrifft eine Gleichspannungsversorgungseinrichtung zum Umwandeln einer energieliefernden Gleichspannung in eine von der energieliefernden Gleichspannung galvanisch getrennte Versorgungsgleichspannung. Weiterhin betrifft Erfindung eine Leistungshalbleiterschaltung, welche einen Leistungshalbleiter und eine Treiberschaltung zum Ansteuern des Leistungshalbleiters aufweist und welche zum Betrieb eine potentialfreie Versorgungsgleichspannung benötigt. Darüber hinaus betrifft Erfindung eine leistungselektronische Schaltung mit einer derartigen Leistungshalbleiterschaltung und mit einer derartigen Gleichspannungsversorgungseinrichtung, bei der die Gleichspannungsversorgungseinrichtung die Leistungshalbleiterschaltung mit der erforderlichen potentialfreien Versorgungsgleichspannung versorgt.

Fig. 1

**Beschreibung**

Die Erfindung betrifft eine Gleichspannungsversorgungseinrichtung zum Umwandeln einer energieliefernden Gleichspannung in eine von der energieliefernden Gleichspannung galvanisch getrennte Versorgungsgleichspannung. Weiterhin betrifft Erfindung eine Leistungshalbleiterschaltung, welche einen Leistungshalbleiter und eine Treiberschaltung zum Ansteuern des Leistungshalbleiters aufweist und welche zum Betrieb eine potentialfreie Versorgungsgleichspannung benötigt. Darüber hinaus betrifft Erfindung eine leistungselektronische Schaltung mit einer derartigen Leistungshalbleiterschaltung und mit einer derartigen Gleichspannungsversorgungseinrichtung, bei der die Gleichspannungsversorgungseinrichtung die Leistungshalbleiterschaltung mit der erforderlichen potentialfreien Versorgungsgleichspannung versorgt.

In der Leistungselektronik wird in zahlreichen Anwendungen eine galvanisch getrennte Signal- und Energieübertragung vorausgesetzt. Insbesondere die Ansteuerung von Halbleiterschaltern innerhalb leistungselektronischer Anwendungen machen eine galvanische Trennung der hierzu verwendeten Treiberschaltungen von ihren Signal- und Energiequellen unverzichtbar. Eine aus Referenz [1] bekannte Lösung beruht dabei auf dem Prinzip der kapazitiven Signal- und Energieübertragung. Dabei wird die galvanische Trennung durch zwei Transferkondensatoren, also kapazitiv, realisiert.

Weiterhin sind Lösungen bekannt, bei denen die galvanische Trennung mittels eines Transformators, also induktiv, hergestellt wird.

Aufgabe der vorliegenden Erfindung ist es, eine verbesserte galvanische Trennung bereitzustellen.

In einem ersten Aspekt betrifft die Erfindung eine Gleichspannungsversorgungseinrichtung zum Umwandeln einer energieliefernden Gleichspannung in eine von der energieliefernden Gleichspannung galvanisch getrennte Versorgungsgleichspannung, wobei die Gleichspannungsversorgungseinrichtung umfasst:

einen ersten Spannungseingang und einen zweiten Spannungseingang zum Empfangen der energieliefernden Gleichspannung;

einen Halbleiterschalter mit einem ersten Schaltkontakt, einem zweiten Schaltkontakt und einem Steuerkontakt, wobei zweite Schaltkontakt mit dem zweiten Spannungseingang elektrisch verbunden ist;

eine elektrische Kapazität, welche zwischen dem ersten Schaltkontakt und dem zweiten Schaltkontakt wirkt;

einen Transformator mit einer Primärspule und mit einer Sekundärspule, wobei die Primärspule den ersten Spannungseingang mit dem ersten Schaltkontakt elektrisch verbindet;

eine Ansteuereinrichtung zum Ansteuern des Steuerkontakts, wobei die Ansteuereinrichtung so ausgebildet ist, dass der Halbleiterschalter schwingt, so dass an der Primärspule eine resonante primäre Wechselspannung und an der Sekundärspule eine sekundäre Wechselspannung anliegt;

einen ersten Transferkondensator mit einem ersten Kontakt und einem zweiten Kontakt sowie einen zweiten Transferkondensator mit einem ersten Kontakt und einem zweiten Kontakt;

einen Gleichrichter mit einem positiven Ausgangskontakt und einem negativen Ausgangskontakt zum Bereitstellen der Versorgungsgleichspannung, und mit einem ersten Eingangskontakt und einem zweiten Eingangskontakt;

wobei der erste Kontakt des ersten Transferkondensators elektrisch mit dem ersten Eingangskontakt des Gleichrichters verbunden ist, wobei der erste Kontakt des zweiten Transferkondensators elektrisch mit dem zweiten Eingangskontakt des Gleichrichters verbunden ist, wobei der zweite Kontakt des zweiten Transferkondensators elektrisch mit einem ersten Kontakt der Sekundärspule verbunden ist;

wobei der zweite Kontakt des ersten Transferkondensators elektrisch mit einem zweiten Kontakt der Sekundärspule verbunden ist, oder

wobei der zweite Kontakt des ersten Transferkondensators elektrisch mit dem ersten Schaltkontakt und der zweite Schaltkontakt mit einem zweiten Kontakt der Sekundärspule verbunden sind;

wobei ein magnetischer Kopplungsfaktor des Transformators, eine Kapazität des ersten Transferkondensators, eine Kapazität des zweiten Transferkondensators und eine Induktivität der Sekundärspule so gewählt sind, dass die sekundäre Wechselspannung eine Resonanzüberhöhung aufweist.

Die energieliefernde Gleichspannung kann dem ersten Spannungseingang und dem zweiten Spannungseingang mittels einer externen Gleichspannungsquelle zugeführt werden.

Unter galvanischer Trennung (auch galvanische Entkopplung) versteht man das Vermeiden der Übertragung elektrischer Ladungen zwischen zwei Stromkreisen, zwischen denen Leistung oder Signale ausgetauscht werden sollen. Die Übertragung elektrischer Ladungen wird dabei durch elektrisch nicht leitfähige Kopplungsglieder verhindert. Bei galvanischer Trennung sind die elektrischen Potentiale voneinander getrennt und die Stromkreise sind dann untereinander potentialfrei.

Die galvanische Trennung ist dort notwendig, wo sich die Stromkreise in einem gemeinsamen Gehäuse oder in einer vergleichbaren Funktionseinheit befinden und zumindest einer auf den anderen einwirken soll, sie dabei aber in ihren Bezugspotentialen getrennt bleiben müssen.

Bei dem Halbleiterschalter kann es sich um einen Transistor, insbesondere um einen Feldeffekttransistor handeln. Bei einem Feldeffekttransistor wird der erste Schaltkontakt "Drain", der zweite Schaltkontakt "Source" und der Steuerkontakt "Gate" genannt.

Bei der elektrischen Kapazität kann es sich um eine parasitäre Kapazität des Halbleiterschalters handeln. Zusätzlich oder alternativ könnte die elektrische Kapazität ein elektrisches Bauelement sein.

Unter einer elektrischen Verbindung zwischen einem Kontakt eines elektrischen Elements und einem Kontakt eines weiteren elektrischen Elements kann ein niederohmiger Strompfad zwischen den Kontakten verstanden werden.

Die Ansteuereinrichtung kann als Treiberschaltung oder als Rückkopplungseinrichtung ausgebildet sein. Die Rückkopplungseinrichtung, welche als Kondensator ausgeführt sein kann, kann einen Teil des elektrischen Signals, welches an dem ersten Steuerkontakt anliegt, derart um 180° phasenverschoben zum Steuerkontakt zurückführen, dass der Halbleiterschalter schwingt. Die Gleichspannungsversorgungseinrichtung, insbesondere deren Ansteuereinrichtung, kann bei Bedarf durch zusätzliche passive oder aktive Bauelemente ergänzt werden, beispielsweise, um den Arbeitspunkt des Halbleiterschalters einzustellen.

Der Transformator wandelt die primäre Wechselspannung, die an der Primärspule anliegt, in eine sekundäre Ausgangswechselspannung um, die an der anderen Spule abgegriffen werden kann.

Der erste Transferkondensator und der zweite Transferkondensator übertagen elektrische Ladungen und damit elektrische Energie als Wechselstrom zum Gleichrichter. Dabei bewirken sie die gewünschte galvanische Trennung zwischen der energieliefernden Gleichspannung und der Versorgungsgleichspannung, da sie Gleichspannungen sperren. Die Transferkondensatoren weisen eine Spannungsfestigkeit auf, welche, gegebenenfalls unter Berücksichtigung eines Sicherheitszuschlags, über den Spannungen liegt, welche bei der jeweiligen Anwendung auftreten. Beispielsweise kann die Spannungsfestigkeit der Transferkondensatoren 3000 V oder mehr betragen.

Bei dem Gleichrichter kann es sich um einen herkömmlichen Gleichrichter, beispielsweise um einen Brückengleichrichter, handeln. Der Gleichrichter kann insbesondere auf der Basis von Halbleitergleichrichtern hergestellt werden. Der Gleichrichter ist so verschaltet, dass an seinem positiven Ausgangskontakt und an seinem negativen Ausgangskontakt die erzeugte Versorgungsgleichspannung abgegriffen werden kann.

Dabei ist der erste Kontakt des ersten Transferkondensators elektrisch mit dem ersten Eingangskontakt des Gleichrichters verbunden und der erste Kontakt des zweiten Transferkondensators ist elektrisch mit dem zweiten Eingangskontakt des Gleichrichters verbunden. Weiterhin ist der zweite Kontakt des zweiten Transferkondensators elektrisch mit einem ersten Kontakt der Sekundärspule verbunden.

In einem ersten Ausführungsbeispiel ist der zweite Kontakt des ersten Transferkondensators elektrisch mit einem zweiten Kontakt der Sekundärspule verbunden. In diesem Fall bewirkt der Transformator eine zusätzliche galvanische Trennung zwischen der energieliefernden Gleichspannung und der Versorgungsgleichspannung. Allerdings liegen etwaige Gleichspannungen an den Transferkondensatoren an, so dass geringe Anforderungen an die Spannungsfestigkeit des Transformators vorliegen.

In einem zweiten Ausführungsbeispiel ist der zweite Kontakt des ersten Transferkondensators elektrisch mit dem ersten Schaltkontakt verbunden und der zweite Schaltkontakt ist elektrisch mit einem zweiten Kontakt der Sekundärspule verbunden. Auch in diesem Fall ergeben sich geringe Anforderungen an die Spannungsfestigkeit des Transformators, da etwaige Gleichspannungen an den Transferkondensatoren an.

In beiden Ausführungsbeispielen ergeben sich also geringe Anforderungen an die Spannungsfestigkeit des Transformators, so dass dieser platzsparender ausgeführt sein kann, als bei Lösungen, bei denen die galvanische Trennung ausschließlich mittels eines Transformators bewirkt wird. Beispielsweise kann die Spannungsfestigkeit des Transformators 100 V oder weniger betragen.

Die primäre Wechselspannung an der Primärspule schwingt dabei mit einer primären Resonanzfrequenz, welche sich aus den elektrischen Eigenschaften des

Halbleiterschalters, der elektrischen Kapazität, der Primärspule, der Ansteuereinrichtung und ggf. vorhandener parasitärer Elemente ergibt.

Die sekundäre Wechselspannung an der Sekundärspule schwingt dabei ebenfalls mit der primären Resonanzfrequenz. Gleichwohl existiert an der Sekundärspule eine sekundäre Resonanzfrequenz, welche sich aus den elektrischen Eigenschaften der elektrischen Transferkapazitäten, der Sekundärspule, des Gleichrichters, der Last am Ausgang des Gleichrichters und ggf. vorhandener parasitärer Elemente ergibt.

Durch eine geeignete Wahl der Kapazität des ersten Transferkondensators, der Kapazität des zweiten Transferkondensators und der Induktivität der Sekundärspule ist es nun möglich, die sekundäre Resonanzfrequenz so einzustellen, dass diese der primären Resonanzfrequenz entspricht, so dass die Gleichspannungsversorgungseinrichtung in doppelter Resonanz betrieben ist.

Der magnetische Kopplungsfaktor gibt dabei an, welcher Anteil des in der Primärspule erzeugten Magnetfeldes in der Sekundärspule wirkt. Bei einem vollständig magnetisch gekoppelten Transformator beträgt der Kopplungsfaktor folglich 1.

Bei einem nicht-resonant und magnetisch vollständig gekoppelt betriebenen Transformator entspricht das Verhältnis zwischen der Windungszahl $n1$ der Primärspule und der Windungszahl $n2$ der Sekundärspule dem Verhältnis zwischen der Eingangsspannung $Ue$ und der Ausgangsspannung $Ua$. Die Ausgangsspannung $Ua$ ergibt sich als gemäß der Formel

$$Ua = Ue\, n2/n1.$$

Durch die erfindungsgemäß vorgesehene doppelresonante Auslegung der Gleichspannungsversorgungseinrichtung kann nun bei geeigneter Wahl des magnetischen Kopplungsfaktors erreicht werden, dass die sekundäre Wechselspannung des Transformators höher als die mittels der obigen Formel berechnete Ausgangsspannung ist. Dieser Effekt wird als Resonanzüberhöhung bezeichnet. Die Gleichspannungsversorgungseinrichtung kann so ausgebildet sein, dass die Resonanzüberhöhung bei unbelastetem Gleichrichter wenigstens den Faktor 2, bevorzugt wenigstens den Faktor 4, besonders bevorzugt wenigstens den Faktor 8, aufweist.

Die Resonanzüberhöhung der sekundären Wechselspannung bewirkt nun, dass bei gleicher Kapazität der Transferkapazitäten mehr elektrische Ladung übertragen werden kann. Oder anders gesagt: bei gleicher zu übertragender Ladung kann die Kapazität der Transferkapazitäten verringert werden, so dass die Transferkapazitäten platzsparender ausgeführt werden können, als dies etwa bei einer Gleichspannungsversorgungseinrichtung gemäß Referenz [1] möglich ist.

Insgesamt ermöglicht die erfindungsgemäße Gleichspannungsversorgungseinrichtung eine kompakte Ausführung, welche weder mit vorbekannten Einrichtungen mit kapazitiver galvanischer Trennung noch mit vorbekannten Einrichtungen mit induktiver Kopplung zu erreichen ist.

Durch die verringerten Kapazitäten der Transferkondensatoren werden zudem Verluste und elektromagnetische Störungen, wie z. B. Gleichtaktausgleichsströme, verringert.

Gemäß einer bevorzugten Weiterbildung der Erfindung liegt der magnetische Kopplungsfaktor des Transformators zwischen 0,2 und 0,8, bevorzugt zwischen 0,3 und 0,7, besonders bevorzugt zwischen 0,4 und 0,6. Ein zu geringer Kopplungsfaktor führt zu einer geringen Schwingungsanregung der Sekundärspule, ein zu großer Kopplungsfaktor hingegen führt zu einer Kopplung der sekundären Wechselspannung an die primäre Wechselspannung. Bei den genannten Werten kann die Resonanzerhöhung maximiert werden.

Nach einer bevorzugten Weiterbildung der Erfindung ist der Transformator eisenlos ausgeführt. Unter einem eisenlosen Transformator wird ein Transformator verstanden, der einen Kern ohne magnetische Materialien, z. B aus Luft, aufweist. Hierdurch kann der benötigte Bauraum weiter reduziert werden.

Gemäß einer bevorzugten Weiterbildung der Erfindung ist die Ansteuereinrichtung so ausgebildet, dass der Halbleiterschalter mit einer Frequenz von mindestens 50 MHz, bevorzugt von mindestens 100 MHz, besonders bevorzugt von mindestens 150 MHz, schwingt. Durch die Verwendung derart hoher Frequenzen können der Transformator und die Transferkondensatoren weiter verkleinert werden.

Nach einer bevorzugten Weiterbildung der Erfindung weisen der erste Transferkondensator und der zweite Transferkondensator jeweils eine Kapazität von höchstens 10 pF, bevorzugt von höchstens 5 pF, besonders bevorzugt von höchstens 2 pF, auf. Derartige Kondensatoren können selbst mi hoher Spanungsfestigkeit kompakt ausgeführt werden.

Gemäß einer bevorzugten Weiterbildung der Erfindung sind die Primärspule und die Sekundärspule galvanisch voneinander getrennt. Hierdurch kann die erforderliche Spannungsfestigkeit der Transferkapazitäten gesenkt werden.

Nach einer bevorzugten Weiterbildung der Erfindung weist der Gleichrichter einen neutralen Ausgangskontakt auf. Unter einem neutralen Ausgangskontakt wird ein solcher Ausgangskontakt verstanden, der ein Potenzial zwischen dem positiven Ausgangskontakt und dem negativen Ausgangskontakt führt. Dies erweitert den Einsatzbereich der Gleichspannungsversorgungseinrichtung.

In einem weiteren Aspekt betrifft die Erfindung eine Leistungshalbleiterschaltung. Die Leistungshalbleiterschaltung umfasst:

einen Leistungshalbleiter mit einem ersten Schaltkontakt, einem zweiten Schaltkontakt und einem Steuerkontakt, wobei der erste Schaltkontakt des Leistungshalbleiters mit einem ersten Schaltspannungskontakt elektrisch verbunden ist und wobei der zweite Schaltkontakt des Leistungshalbleiters mit einem zweiten Schaltspannungskontakt elektrisch verbunden ist;

eine Treiberschaltung mit einem positiven Versorgungsgleichspannungseingang und einem negativen Versorgungsgleichspannungseingang zum Empfangen einer potentialfreien Versorgungsgleichspannung, wobei ein erster Schaltausgang der Treiberschaltung mit dem Steuerkontakt des Leistungshalbleiters elektrisch verbunden ist, und wobei ein zweiter Schaltausgang der Treiberschaltung mit dem zweiten Schaltkontakt des Leistungshalbleiters elektrisch verbunden ist;

eine Eingangskondensatoranordnung, welcher zwischen dem positiven Versorgungsgleichspannungseingang und dem negativen Versorgungsgleichspannungseingang wirkt;

ein oder mehrere Erntekondensatoren, welche jeweils einen ersten Anschluss und einen zweiten Anschluss aufweisen, wobei der erste Anschluss jeweils mit dem ersten Schaltkontakt elektrisch verbunden ist;

eine erste Diode mit einer Kathode und einer Anode, wobei die Kathode der ersten Diode mit dem positiven Versorgungsgleichspannungseingang elektrisch verbunden ist und wobei die Anode der ersten Diode mit dem zweiten Anschluss eines der Erntekondensatoren elektrisch verbunden ist;

eine zweite Diode mit einer Kathode und einer Anode, wobei die Anode der zweiten Diode mit dem negativen Versorgungsgleichspannungseingang elektrisch verbunden ist und wobei die Kathode der zweiten Diode mit dem zweiten Anschluss eines der Erntekondensatoren elektrisch verbunden ist.

Bei dem Leistungshalbleiter kann es sich um einen Halbleiterschalter handeln, der zum Schalten von hohen Lastspannungen, beispielsweise von 500 V oder mehr, ausgelegt ist. Im eingeschalteten Zustand ist der erste Schaltkontakt mit dem zweiten Schaltkontakt elektrisch verbunden und im ausgeschalteten Zustand ist die elektrische Verbindung zwischen dem ersten Schaltkontakt und dem zweiten Schaltkontakt unterbrochen. Der Leistungshalbleiter wird durch eine Schaltspannung zwischen dem Steuerkontakt und dem zweiten Schaltkontakt gesteuert, wobei die Schaltspannung, mit beispielsweise zwischen 10V und 20 V, deutlich geringer als die zu schaltende Lastspannung sein kann. Die Schaltspannung wird durch die Treiberschaltung bereitgestellt.

Bei dem Leistungshalbleiter kann es sich um einen Transistor, insbesondere um einen Feldeffekttransistor handeln. Bei einem Feldeffekttransistor wird der erste Schaltkontakt "Drain", der zweite Schaltkontakt "Source" und der Steuerkontakt "Gate" genannt.

Die Treiberschaltung benötigt eine Versorgungsgleichspannung, welche gegenüber der Lastspannung potentialfrei sein muss, da das elektrische Potential an den Schaltkontakten des Leistungshalbleiters beim Schalten um mehrere hundert Volt springen kann.

Die potentialfreie Versorgungsgleichspannung kann über den positiven Versorgungsgleichspannungseingang und den negativen Versorgungsgleichspannungseingang aufgenommen werden. Die Versorgungsgleichspannung lädt die Eingangskondensatoranordnung, welche als Zwischenspeicher wirken.

Der Erntekondensator ist mit einem ersten Anschluss mit dem ersten Schaltkontakt des Leistungshalbleiters verbunden. Eine erste Diode ist mit ihrer Kathode mit dem positiven Versorgungsspannungseingang und mit ihrer Anode mit dem zweiten Anschluss des Erntekondensators elektrisch verbunden. Eine zweite Diode ist mit ihrer Anode mit dem negativen Versorgungsgleichspannungseingang und mit ihrer Kathode mit dem zweiten Anschluss des Erntekondensators elektrisch verbunden.

Der Erntekondensator in Verbindung mit der ersten Diode und der zweiten Diode bewirkt nun, dass beim Schalten des Leistungshalbleiters in dem Erntekondensator durch die Lastspannung gespeicherte elektrische Ladungen über die anti-parallelen Dioden in die Eingangskondensatoranordnung fließen. So liegt bei ausgeschaltetem Leistungshalbleiter die Lastspannung zwischen den beiden Schaltkontakten und damit an dem Erntekondensator an.

Beim Einschalten des Leistungshalbleiters sinkt die Spannung zwischen den Schaltkontakten nahezu auf null ab, wodurch ein Teil der in dem Erntekondensator gespeicherten Ladungen, je nach Polarität der am Erntekondensator anliegenden Spannung, über die erste Diode oder über die zweite Diode in die Eingangskondensatoranordnung fließt. Auf diese Weise werden elektrische Ladungen aus dem Lastkreis "geerntet" und stehen zur Versorgung der Treiberschaltung bereit.

Beim Ausschalten des Leistungshalbleiters steigt die Spannung zwischen den Schaltkontakten nahezu auf die Lastspannung, wodurch der Erntekondensator über die jeweils andere Diode wieder geladen wird.

Im Ergebnis muss der Treiberschaltung weniger elektrische Energie über den positiven Versorgungsgleichspannungseingang und den negativen Versorgungsgleichspannungseingang zugeführt werden. Damit kann eine Gleichspannungsversorgungseinrichtung, welche die potentialfreie Versorgungsgleichspannung liefert, für eine geringere Leistung ausgelegt werden. Insbesondere können potentialtrennende Bauteile, wie beispielsweise Transformatoren oder Transferkapazitäten kleiner dimensioniert werden.

Gemäß einer bevorzugten Weiterbildung der Erfindung sind die erste Diode und die zweite Diode mit einem selben der ein oder mehreren Erntekondensatoren elektrisch verbunden. Auf diese Weise kann der bauliche Aufwand gering gehalten werden.

Nach einer bevorzugten Weiterbildung der Erfindung ist die erste Diode und/oder die zweite Diode als parasitäre Diode eines schaltbaren Halbleiterbauelements ausgebildet. Die Ladung pro Zeit, also der Strom, der von dem Erntekondensator in die Eingangskondensatoranordnung fließen kann, hängt insbesondere von der Anzahl von Schaltzyklen pro Zeit und der Lastspannung ab. Um nun bei einer hohen Anzahl von Schaltzyklen pro Zeiteinheit und einer hohen Lastspannung ein Überladen der Eingangskondensatoranordnung zu verhindern, kann die erste Diode und/oder die zweite Diode überbrückbar ausgestaltet sein. Dies kann in einfacher Weise bewerkstelligt werden, wenn die Diode als parasitäre Diode eines schaltbaren Halbleiterbauelements ausgebildet ist. Durch Schalten des Halbleiterbauelements kann die so ausgebildete Diode bedarfsweise kurzgeschlossen werden, so dass das Laden der Eingangskondensatoranordnung bei manchen Schaltvorgängen unterbleibt.

Gemäß einer bevorzugten Weiterbildung der Erfindung weist die Treiberschaltung einen neutralen Versorgungsgleichspannungseingang auf, wobei eine Mittenanzapfung der Eingangskondensatoranordnung mit dem neutralen Versorgungsgleichspannungseingang elektrisch verbunden ist, so dass eine erste Teilkapazität der Eingangskondensatoranordnung zwischen dem positiven Versorgungsgleichspannungseingang und dem neutralen Versorgungsgleichspannungseingang wirkt und dass eine zweite Teilkapazität der Eingangskondensatoranordnung zwischen dem negativen Versorgungsgleichspannungseingang und dem neutralen Versorgungsgleichspannungseingang wirkt. Eine derartige Ausgestaltung erlaubt die Verwendung der Erfindung in Fällen, in denen die Treiberschaltung ein neutrales Versorgungsgleichspannungspotential benötigt.

Gemäß einer bevorzugten Weiterbildung der Erfindung weist die Leistungshalbleiterschaltung eine dritte Diode mit einer Kathode und einer Anode auf, wobei die Anode der dritten Diode mit dem neutralen Versorgungsgleichspannungseingang elektrisch verbunden ist und wobei die Kathode der dritten Diode mit dem zweiten Anschluss eines der Erntekondensatoren elektrisch verbunden ist; und wobei die Leistungshalbleiterschaltung eine vierte Diode mit einer Kathode und einer Anode aufweist, wobei die Kathode der vierten Diode mit dem neutralen Versorgungsgleichspannungseingang elektrisch verbunden ist und wobei die Anode der vierten Diode mit dem zweiten Anschluss eines der Erntekondensatoren elektrisch verbunden ist. In diesem Fall können die erste Teilkapazität und die zweite Teilkapazität unabhängig voneinander mit geernteten Ladungen geladen werden, was die Gesamtmenge der geernteten Ladungen erhöht.

Nach einer bevorzugten Weiterbildung der Erfindung umfassen die ein oder mehrere Erntekondensatoren einen ersten Erntekondensator und einen zweiten Erntekondensator, wobei die erste Diode und die dritte Diode mit dem ersten Erntekondensator elektrisch verbunden sind, und wobei die zweite Diode und die vierte Diode mit dem zweiten Erntekondensator elektrisch verbunden sind. Auf diese Weise können die Erntekondensatoren jeweils auf den Energiebedarf bzw. Ladungsbedarf der zugeordneten Teilkapazität abgestimmt werden.

Gemäß einer bevorzugten Weiterbildung der Erfindung ist wenigstens eine der mit dem ersten Erntekondensator elektrisch verbundenen Dioden als parasitäre Diode eines schaltbaren Halbleiterbauelements ausgebildet, wobei wenigstens eine der mit dem zweiten Erntekondensator elektrisch verbundenen Dioden als parasitäre Diode eines schaltbaren Halbleiterbauelements ausgebildet ist. Auf diese Weise kann eine Überladung einer der beiden Teilkapazitäten verhindert werden, ohne den Ladungsfluss zur jeweils anderen Teilkapazität zu unterbrechen. Zudem können so eine Arbeitsspannung an der ersten Teilkapazität und eine Arbeitsspannung an der zweiten Teilkapazität unabhängig voneinander eingestellt werden.

In einem weiteren Aspekt betrifft die Erfindung eine leistungselektronische Schaltung. Die leistungselektronische Schaltung umfasst:

eine erfindungsgemäße Gleichspannungsversorgungseinrichtung; und

eine erfindungsgemäße Leistungshalbleiterschaltung;

wobei der positive Ausgangskontakt mit dem positiven Versorgungsgleichspannungseingang elektrisch verbunden ist; und

wobei der negative Ausgangskontakt mit dem negativen Versorgungsgleichspannungseingang elektrisch verbunden ist.

Die erfindungsgemäße leistungselektronische Schaltung vereinigt die Vorteile der erfindungsgemäßen Gleichspannungsversorgungseinrichtung mit den Vorteilen der erfindungsgemäßen Leistungshalbleiterschaltung. Die ohnehin kompakt zu realisierende Gleichspannungsversorgungseinrichtung kann noch kompakter ausgeführt werden, da der Leistungsbedarf der Leistungshalbleiterschaltung an den Versorgungsgleichspannungseingängen verringert ist. Durch die verringerten Kapazitäten der Transferkondensatoren werden zudem Verluste und elektromagnetische Störungen, wie z. B. Gleichtaktausgleichsströme, verringert.

Gemäß einer bevorzugten Weiterbildung der Erfindung weist die Gleichspannungsversorgungseinrichtung 1 eine Steuerschaltung zur Erzeugung von Steuersignalen zum Steuern der Treiberschaltung 58 auf, wobei die Steuersignale über den ersten Transferkondensator 13 und den zweiten Transferkondensator 16 an die Treiberschaltung 58 übertragen sind. Auf diese Weise kann auf eine weitere galvanische Trenneinrichtung verzichtet werden.

Im Folgenden werden die vorliegende Erfindung und deren Vorteile anhand von Figuren näher beschrieben. Es zeigen:

Figur 1    ein erstes Ausführungsbeispiel einer Gleichspannungsversorgungseinrichtung in einer schematischen Darstellung;

Figur 2    ein zweites Ausführungsbeispiel einer Gleichspannungsversorgungseinrichtung in einer schematischen Darstellung;

Figur 3    ein erstes Ausführungsbeispiel einer Leistungshalbleiterschaltung in einer schematischen Darstellung;

Figur 4    ein zweites Ausführungsbeispiel einer Leistungshalbleiterschaltung in einer schematischen Darstellung;

Figur 5    ein drittes Ausführungsbeispiel einer Leistungshalbleiterschaltung in einer schematischen Darstellung; und

Figur 6    ein Ausführungsbeispiel einer leistungselektronischen Schaltung in einer schematischen Darstellung.

Gleiche oder gleichartige Elemente oder Elemente mit gleicher oder äquivalenter Funktion sind im Folgenden mit gleichen oder gleichartigen Bezugszeichen versehen.

In der folgenden Beschreibung werden Ausführungsbeispiele mit einer Vielzahl von Merkmalen der vorliegenden Erfindung näher beschrieben, um ein besseres Verständnis der Erfindung zu vermitteln. Es ist jedoch festzuhalten, dass die vorliegende Erfindung auch unter Auslassung einzelner der beschriebenen Merkmale umgesetzt werden kann. Es sei auch darauf hingewiesen, dass die in verschiedenen Ausführungsbeispielen gezeigten Merkmale auch in anderer Weise kombinierbar sind, sofern dies nicht ausdrücklich ausgeschlossen ist oder zu Widersprüchen führen würde.

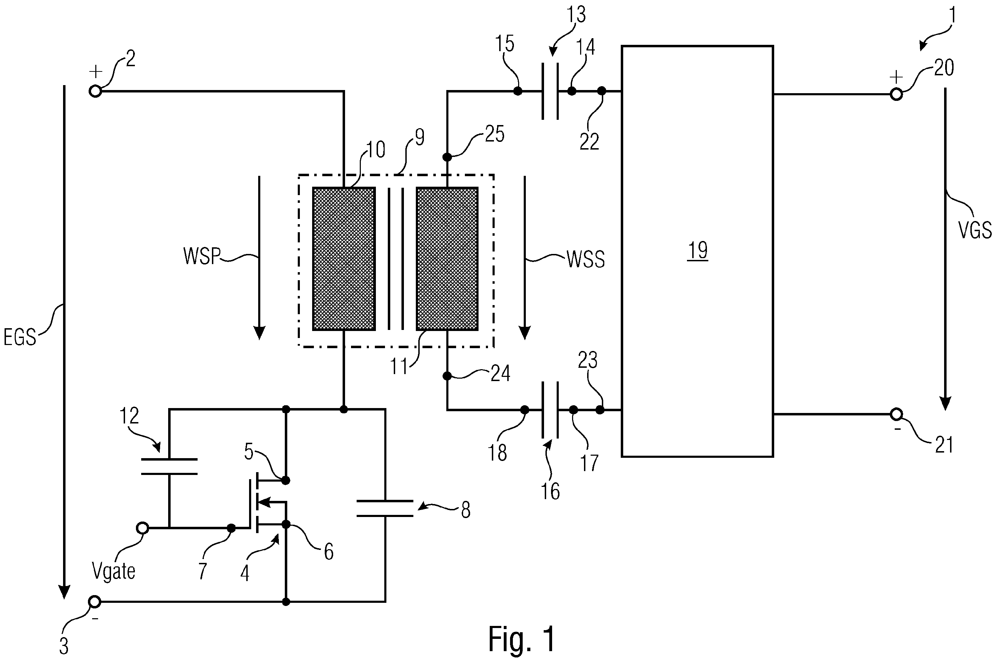

Figur 1 zeigt ein erstes Ausführungsbeispiel einer Gleichspannungsversorgungseinrichtung 1 zum Umwandeln einer energieliefernden Gleichspannung EGS in eine von der energieliefernden Gleichspannung EGS galvanisch getrennte Versorgungsgleichspannung VGS in einer schematischen Darstellung.

Die Gleichspannungsversorgungseinrichtung 1 umfasst:

einen ersten Spannungseingang 2 und einen zweiten Spannungseingang 3 zum Empfangen der energieliefernden Gleichspannung EGS;

einen Halbleiterschalter 4 mit einem ersten Schaltkontakt 5, einem zweiten Schaltkontakt 6 und einem Steuerkontakt 7, wobei zweite Schaltkontakt 6 mit dem zweiten Spannungseingang 3 elektrisch verbunden ist;

eine elektrische Kapazität 8, welche zwischen dem ersten Schaltkontakt 5 und dem zweiten Schaltkontakt 6 wirkt;

einen Transformator 9 mit einer Primärspule 10 und mit einer Sekundärspule 11, wobei die Primärspule 10 den ersten Spannungseingang 2 mit dem ersten Schaltkontakt 5 elektrisch verbindet;

eine Ansteuereinrichtung 12 zum Ansteuern des Steuerkontakts 7, wobei die Ansteuereinrichtung 12 so ausgebildet ist, dass der Halbleiterschalter 4 schwingt, so dass an der Primärspule 10 eine resonante primäre Wechselspannung WSP und an der Sekundärspule 11 eine sekundäre Wechselspannung WSS anliegt;

einen ersten Transferkondensator 13 mit einem ersten Kontakt 14 und einem zweiten Kontakt 15 sowie einen zweiten Transferkondensator 16 mit einem ersten Kontakt 17 und einem zweiten Kontakt 18;

einen Gleichrichter 19 mit einem positiven Ausgangskontakt 20 und einem negativen Ausgangskontakt 21 zum Bereitstellen der Versorgungsgleichspannung VGS, und mit einem ersten Eingangskontakt 22 und einem zweiten Eingangskontakt 23;

wobei der erste Kontakt 14 des ersten Transferkondensators 13 elektrisch mit dem ersten Eingangskontakt 22 des Gleichrichters 19 verbunden ist, wobei der erste Kontakt 17 des zweiten Transferkondensators 16 elektrisch mit dem zweiten Eingangskontakt 23 des Gleichrichters 19 verbunden ist, wobei der zweite Kontakt 18 des zweiten Transferkondensators 16 elektrisch mit einem ersten Kontakt 24 der Sekundärspule 11 verbunden ist;

wobei der zweite Kontakt 15 des ersten Transferkondensators 13 elektrisch mit einem zweiten Kontakt 25 der Sekundärspule 11 verbunden ist;

wobei ein magnetischer Kopplungsfaktor des Transformators 9, eine Kapazität des ersten Transferkondensators 13, eine Kapazität des zweiten Transferkondensators 16 und eine Induktivität der Sekundärspule 11 so gewählt sind, dass die sekundäre Wechselspannung WSS eine Resonanzüberhöhung aufweist.

Der Arbeitspunkt des Halbleiterschalters 4 kann mittels einer Spannung Vgate eingestellt werden.

Gemäß einer bevorzugten Weiterbildung der Erfindung liegt der magnetische Kopplungsfaktor des Transformators 9 zwischen 0,2 und 0,8, bevorzugt zwischen 0,3 und 0,7, besonders bevorzugt zwischen 0,4 und 0,6.

Nach einer bevorzugten Weiterbildung der Erfindung ist der Transformator 9 eisenlos ausgeführt.

Gemäß einer bevorzugten Weiterbildung der Erfindung ist die Ansteuereinrichtung 12 so ausgebildet, dass der Halbleiterschalter 4 mit einer Frequenz von mindestens 50 MHz, bevorzugt von mindestens 100 MHz, besonders bevorzugt von mindestens 150 MHz, schwingt.

Nach einer bevorzugten Weiterbildung der Erfindung weisen der erste Transferkondensator 13 und der zweite Transferkondensator 16 jeweils eine Kapazität von höchstens 10 pF, bevorzugt von höchstens 5 pF, besonders bevorzugt von höchstens 2 pF, auf.

Gemäß einer bevorzugten Weiterbildung der Erfindung sind die Primärspule 10 und die Sekundärspule 11 galvanisch voneinander getrennt.

Die Primärspule 10 des Transformators 9 dient als Induktivität eines Verstärkers, welcher als Class E Resonator ausgebildet sein kann, und welcher mit der Kapazität 8 am Ausgang des Halbleiterschalters 4 in Resonanz tritt.

Das durch den Verstärker erzeugte magnetische Feld in der Primärspule 10 koppelt nun in die Sekundärspule 11 des Transformators 9. Für die Funktionalität ist es hier wichtig, dass die magnetische Kopplung im Transformator 9 unvollständig ist. Durch die unvollständige Kopplung kann der Primärkreis den Sekundärkreis zwar anregen, aber hindert diesen nicht daran eine Spannungserhöhung im Sekundärkreis zu erzeugen, welche höher ist, als die durch das Wicklungsverhältnis des Transformators 9 bestimmte nicht-resonante Spannung.

In der Sekundärspule 11 des Transformators 9 wird nun eine sekundäre Wechselspannung WSS erzeugt, welche einen Stromfluss zur Folge hat. Dieser Stromfluss führt zu einer Spannungsänderung in den Transferkapazitäten 13, 16. Wird der Stromkreis nun so ausgelegt, dass sich die Sekundärspule 11 des Transformators 9 in Resonanz mit den Kapazitäten (Transferkapazitäten 10, 11, parasitäre Kapazitäten, beispielsweise des Transformators 9) des Sekundärkreises begibt, so kommt es zu einer Resonanzüberhöhung der sekundären Wechselspannung WSS im Vergleich zu einer sekundären Wechselspannung im nicht-resonanten Betrieb. Die resonant erzeugte sekundäre Wechselspannung WSS wird nun genutzt, um Ladung über die Transferkapazitäten 13, 16 zu übertragen. Die übertragene Ladung kann nun zur Energieversorgung eines galvanisch getrennten Schaltkreises genutzt werden.

Die Resonanzfrequenzen der Primärseite und der Sekundärseite stimmen dabei wenigstens annähernd überein.

Die Transferkapazitäten 13, 16 können ggf. auch als Element für galvanisch getrennte Signalübertragung verwendet werden.

Der Transformator 9 ist bevorzugt kernlos bzw. eisenlos ausgeführt, da es ohnehin notwendig ist eine weniger starke Kopplung zwischen der Primärspule 10 und der Sekundärspule 11 zu realisieren. Hierdurch werden Kernverluste vermieden, was den Wirkungsgrad verbessern kann.

Die Transferkapazitäten 13, 16 können gering gehalten werden, so dass Gleichtaktausgleichsströme gering gehalten werden können. Um genügend Ladung zu übertragen, kann eine hochfrequente, beispielsweise sinusförmige Spannung, im Sekundärkreis erzeugt werden, was die Funktionalität dieses Schaltkreises ermöglicht.

Durch die schwache magnetische Kopplung des Transformators 9 ist die Sekundärspule 11 soweit unabhängig von der Primärspule 10, dass eine resonante Spannungsüberhöhung realisiert werden kann. Die resonante Spannungserhöhung kann beispielsweise den Faktor 10 umfassen.

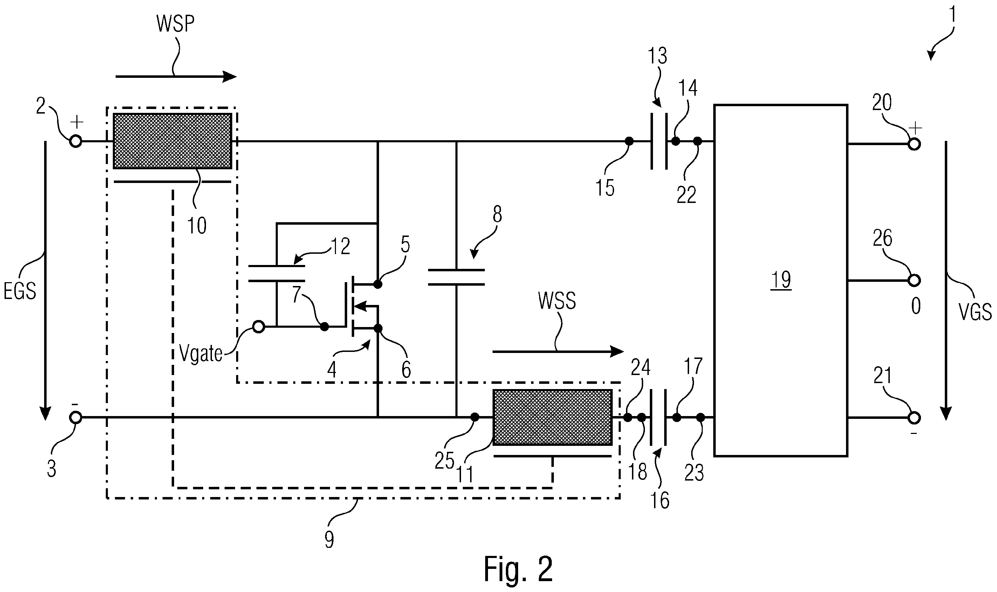

Figur 2 ein zweites Ausführungsbeispiel einer Gleichspannungsversorgungseinrichtung in einer schematischen Darstellung.

Die Gleichspannungsversorgungseinrichtung 1 umfasst:

einen ersten Spannungseingang 2 und einen zweiten Spannungseingang 3 zum Empfangen der energieliefernden Gleichspannung EGS;

einen Halbleiterschalter 4 mit einem ersten Schaltkontakt 5, einem zweiten Schaltkontakt 6 und einem Steuerkontakt 7, wobei zweite Schaltkontakt 6 mit dem zweiten Spannungseingang 3 elektrisch verbunden ist;

eine elektrische Kapazität 8, welche zwischen dem ersten Schaltkontakt 5 und dem zweiten Schaltkontakt 6 wirkt;

einen Transformator 9 mit einer Primärspule 10 und mit einer Sekundärspule 11, wobei die Primärspule 10 den ersten Spannungseingang 2 mit dem ersten Schaltkontakt 5 elektrisch verbindet;

eine Ansteuereinrichtung 12 zum Ansteuern des Steuerkontakts 7, wobei die Ansteuereinrichtung 12 so ausgebildet ist, dass der Halbleiterschalter 4 schwingt, so dass an der Primärspule 10 eine resonante primäre Wechselspannung WSP und an der Sekundärspule 11 eine sekundäre Wechselspannung WSS anliegt;

einen ersten Transferkondensator 13 mit einem ersten Kontakt 14 und einem zweiten Kontakt 15 sowie einen zweiten Transferkondensator 16 mit einem ersten Kontakt 17 und einem zweiten Kontakt 18;

einen Gleichrichter 19 mit einem positiven Ausgangskontakt 20 und einem negativen Ausgangskontakt 21 zum Bereitstellen der Versorgungsgleichspannung VGS, und mit einem ersten Eingangskontakt 22 und einem zweiten Eingangskontakt 23;

wobei der erste Kontakt 14 des ersten Transferkondensators 13 elektrisch mit dem ersten Eingangskontakt 22 des Gleichrichters 19 verbunden ist, wobei der erste Kontakt 17 des zweiten Transferkondensators 16 elektrisch mit dem zweiten Eingangskontakt 23 des Gleichrichters 19 verbunden ist, wobei der zweite Kontakt 18 des zweiten Transferkondensators 16 elektrisch mit einem ersten Kontakt 24

der Sekundärspule 11 verbunden ist;

wobei der zweite Kontakt 15 des ersten Transferkondensators 13 elektrisch mit dem ersten Schaltkontakt 5 und der zweite Schaltkontakt 6 mit einem zweiten Kontakt 25 der Sekundärspule 11 verbunden sind;

wobei ein magnetischer Kopplungsfaktor des Transformators 9, eine Kapazität des ersten Transferkondensators 13, eine Kapazität des zweiten Transferkondensators 16 und eine Induktivität der Sekundärspule 11 so gewählt sind, dass die sekundäre Wechselspannung WSS eine Resonanzüberhöhung aufweist.

Nach einer bevorzugten Weiterbildung der Erfindung weist der Gleichrichter 19 einen neutralen Ausgangskontakt 26 auf.

Der wesentliche Unterschied des zweiten Ausführungsbeispiels zum ersten Ausführungsbeispiel besteht darin, dass der zweite Kontakt 15 des ersten Transferkondensators 13 nicht mit dem zweiten Kontakt 25 der Sekundärspule 11 elektrisch verbunden ist. Vielmehr ist der zweite Kontakt 15 des ersten Transferkondensators 13 elektrisch mit dem ersten Schaltkontakt 5 verbunden und der zweite Schaltkontakt 6 ist mit dem zweiten Kontakt 25 der Sekundärspule 11 verbunden. Ansonsten gelten die Erläuterungen zum ersten Ausführungsbeispiel auch für das zweite Ausführungsbeispiel.

Beim zweiten Ausführungsbeispiel stellt der Transformator 9 mit der Primärspule 10 und der Sekundärspule 11 im Gegensatz zum ersten Ausführungsbeispiel keine galvanische Trennung dar. Trotzdem ist die Funktionsweise ähnlich. Die Primärspule 10 des Transformators 9 ist in Resonanz mit der Ausgangskapazität 8 des schaltenden Halbleiterschalters 4 und ggf. mit zusätzlichen Kapazitäten parallel zum Halbleiterschalter 9 oder auch parallel zu den Transferkapazitäten 13, 16, während die unvollständig mit der Primärspule 10 gekoppelte Sekundärspule 11 des Transformators 9 in Resonanz mit ihrer Eigenkapazität und den Transferkapazitäten 13, 16 geht. Die Kopplungsrichtung der Spulen im Transformator 9 ist dabei nicht festgelegt. Die Resonanz in der Sekundärspule 11 führt zu einer sinusförmigen Spannungsüberhöhung, welche nun für die Energieübertragung über die Transferkapazitäten 13, 16 genutzt werden kann.

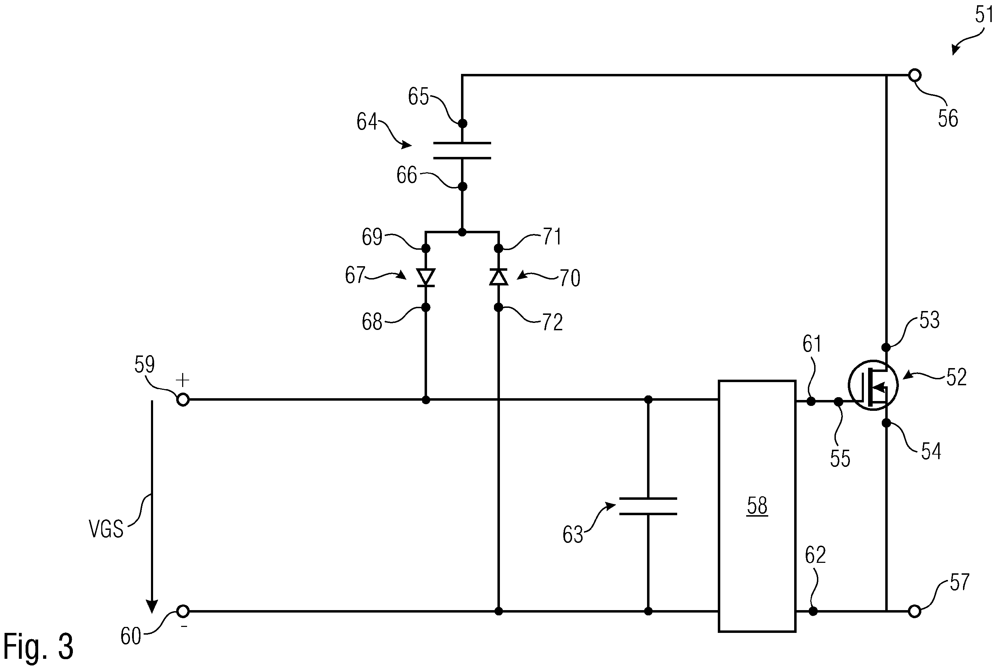

Figur 3 zeigt ein erstes Ausführungsbeispiel einer Leistungshalbleiterschaltung in einer schematischen Darstellung. Die Leistungshalbleiterschaltung 51 umfasst:

einen Leistungshalbleiter 52 mit einem ersten Schaltkontakt 53, einem zweiten Schaltkontakt 54 und einem Steuerkontakt 55, wobei der erste Schaltkontakt 53 des Leistungshalbleiters 52 mit einem ersten Schaltspannungskontakt 56 elektrisch verbunden ist und wobei der zweite Schaltkontakt 54 des Leistungshalbleiters 52 mit einem zweiten Schaltspannungskontakt 57 elektrisch verbunden ist;

eine Treiberschaltung 58 mit einem positiven Versorgungsgleichspannungseingang 59 und einem negativen Versorgungsgleichspannungseingang 60 zum Empfangen einer potentialfreien Versorgungsgleichspannung VGS, wobei ein erster Schaltausgang 61 der Treiberschaltung 58 mit dem Steuerkontakt 55 des Leistungshalbleiters 52 elektrisch verbunden ist, und wobei ein zweiter Schaltausgang 62 der Treiberschaltung 58 mit dem zweiten Schaltkontakt 54 des Leistungshalbleiters 52 elektrisch verbunden ist;

eine Eingangskondensatoranordnung 63, welcher zwischen dem positiven Versorgungsgleichspannungseingang 59 und dem negativen Versorgungsgleichspannungseingang 60 wirkt;

ein oder mehrere Erntekondensatoren 64, welche jeweils einen ersten Anschluss 65 und einen zweiten Anschluss 66 aufweisen, wobei der erste Anschluss 65 jeweils mit dem ersten Schaltkontakt 53 elektrisch verbunden ist;

eine erste Diode 67 mit einer Kathode 68 und einer Anode 69, wobei die Kathode 68 der ersten Diode 67 mit dem positiven Versorgungsgleichspannungseingang 59 elektrisch verbunden ist und wobei die Anode 69 der ersten Diode 67 mit dem zweiten Anschluss 66 eines der Erntekondensatoren 64 elektrisch verbunden ist;

eine zweite Diode 70 mit einer Kathode 71 und einer Anode 72, wobei die Anode 72 der zweiten Diode 70 mit dem negativen Versorgungsgleichspannungseingang 60 elektrisch verbunden ist und wobei die Kathode 71 der zweiten Diode 70 mit dem zweiten Anschluss 66 eines der Erntekondensatoren 64 elektrisch verbunden ist.

Gemäß einer bevorzugten Weiterbildung der Erfindung sind die erste Diode 67 und die zweite Diode 70 mit einem selben der ein oder mehreren Erntekondensatoren 64 elektrisch verbunden.

Wenn beim Ausführungsbeispiel der Figur 3 der Leistungshalbleiter 52 ausgeschaltet ist, liegt die Lastspannung zwischen dem ersten Schaltkontakt 53 und dem zweiten Schaltkontakt 54 an. Damit liegt die Lastspannung auch am Erntekondensator 65 an. Wird nun der Leistungshalbleiter 52 eingeschaltet, so sinkt die Spannung am Leistungshalbleiter 4 auf nahe null ab, wodurch der Erntekondensator 65 über die zweite Diode 70 entladen und die Eingangskondensatoranordnung 63 geladen wird. Wird der Leistungshalbleiter 4 wieder eingeschaltet, so wird der Erntekondensator 64 über die erste Diode 67 wieder aufgeladen.

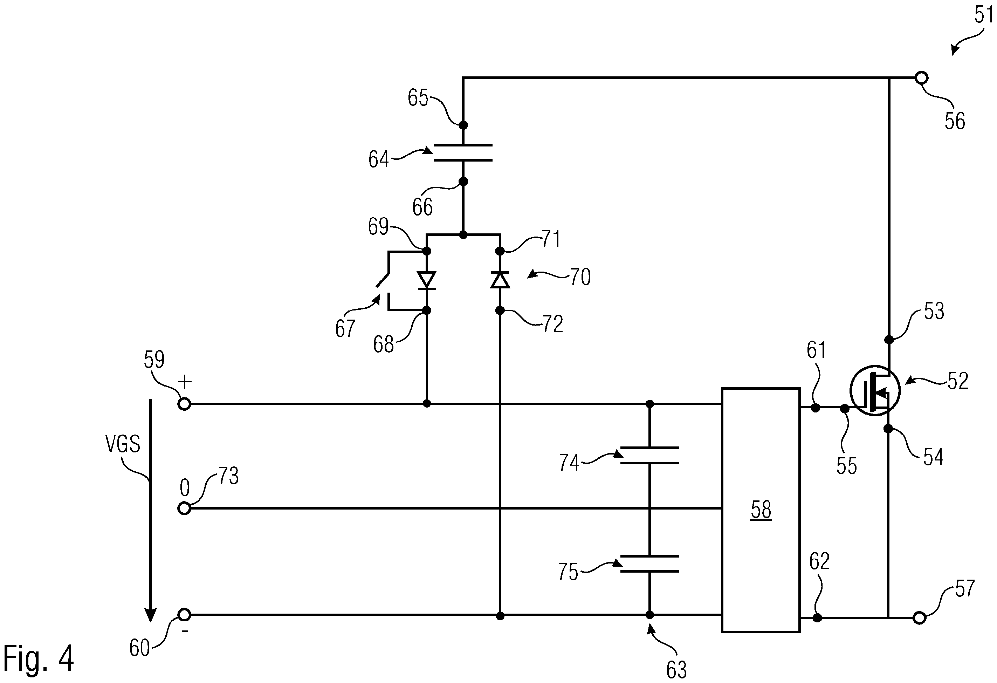

Figur 4 zeigt ein zweites Ausführungsbeispiel einer Leistungshalbleiterschaltung in einer schematischen Darstellung.

Nach einer bevorzugten Weiterbildung der Erfindung ist die erste Diode 67 und/oder die zweite Diode 70 als parasitäre Diode eines schaltbaren Halbleiterbauelements ausgebildet.

Gemäß einer bevorzugten Weiterbildung der Erfindung weist die Treiberschaltung 58 einen neutralen Versorgungsgleichspannungseingang 73 auf, wobei eine Mittenanzapfung der Eingangskondensatoranordnung 63 mit dem neutralen Versorgungsgleichspannungseingang 73 elektrisch verbunden ist, so dass eine erste Teilkapazität 74 der Eingangskondensatoranordnung 63 zwischen dem positiven Versorgungsgleichspannungseingang 59 und dem neutralen Versorgungsgleichspannungseingang 73 wirkt und dass eine zweite Teilkapazität 75 der Eingangskondensatoranordnung 63 zwischen dem negativen Versorgungsgleichspannungseingang 60 und dem neutralen Versorgungsgleichspannungseingang 73 wirkt.

Wenn beim Ausführungsbeispiel der Figur 4 der Leistungshalbleiter 52 ausgeschaltet ist, liegt die Lastspannung zwischen dem ersten Schaltkontakt 53 und dem zweiten Schaltkontakt 54 an. Damit liegt die Lastspannung auch am Erntekondensator 65 an. Wird nun der Leistungshalbleiter 52 eingeschaltet, so sinkt die Spannung am Leistungshalbleiter 4 auf nahe null ab, wodurch der Erntekondensator 65 über die zweite Diode 70 entladen und die Teilkapazitäten 74 und 75 der Eingangskondensatoranordnung 63 geladen werden. Wird der Leistungshalbleiter 4 wieder eingeschaltet, so wird der Erntekondensator 64 über die erste Diode 67 wieder aufgeladen.

Ein Überladen der Teilkapazitäten 74 und 75 der Eingangskondensatoranordnung 63 kann durch zeitweises Kurzschließen der ersten Diode 67 vermieden werden.

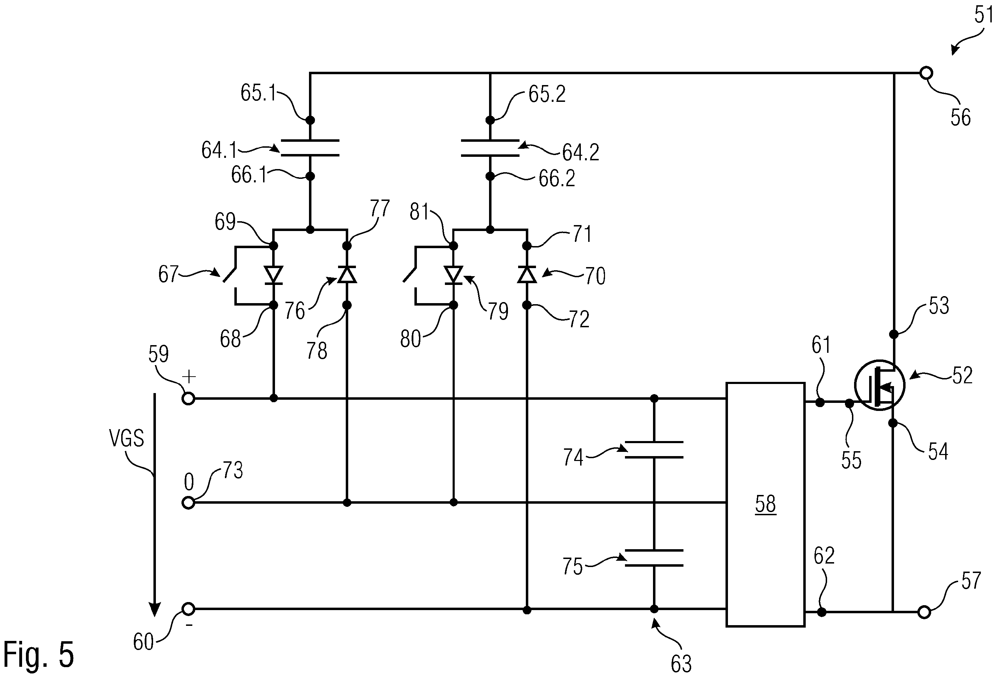

Figur 5 zeigt ein drittes Ausführungsbeispiel einer Leistungshalbleiterschaltung in einer schematischen Darstellung.

Gemäß einer bevorzugten Weiterbildung der Erfindung weist die Leistungshalbleiterschaltung 58 eine dritte Diode 76 mit einer Kathode 77 und einer Anode 78 auf, wobei die Anode 78 der dritten Diode 76 mit dem neutralen Versorgungsgleichspannungseingang 73 elektrisch verbunden ist und wobei die Kathode 77 der dritten Diode 76 mit dem zweiten Anschluss 66 eines der Erntekondensatoren 64 elektrisch verbunden ist; und wobei die Leistungshalbleiterschaltung 58 eine vierte Diode 79 mit einer Kathode 80 und einer Anode 81 aufweist, wobei die Kathode 80 der vierten Diode 79 mit dem neutralen Versorgungsgleichspannungseingang 73 elektrisch verbunden ist und wobei die Anode 81 der vierten Diode 79 mit dem zweiten Anschluss 66 eines der Erntekondensatoren 64 elektrisch verbunden ist.

Nach einer bevorzugten Weiterbildung der Erfindung umfassen die ein oder mehrere Erntekondensatoren 64 einen ersten Erntekondensator 64.1 und einen zweiten Erntekondensator 64.2;

wobei die erste Diode 67 und die dritte Diode 76 mit dem ersten Erntekondensator 64.1 elektrisch verbunden sind; und

wobei die zweite Diode 70 und die vierte Diode 79 mit dem zweiten Erntekondensator 64.2 elektrisch verbunden sind.

Gemäß einer bevorzugten Weiterbildung der Erfindung ist wenigstens eine der mit dem ersten Erntekondensator 64.1 elektrisch verbundenen Dioden 67, 76 als parasitäre Diode eines schaltbaren Halbleiterbauelements ausgebildet;

wobei wenigstens eine der mit dem zweiten Erntekondensator 64.2 elektrisch verbundenen Dioden 70, 79 als parasitäre Diode eines schaltbaren Halbleiterbauelements ausgebildet ist.

Wenn beim Ausführungsbeispiel der Figur 5 der Leistungshalbleiter 52 ausgeschaltet ist, liegt die Lastspannung zwischen dem ersten Schaltkontakt 53 und dem zweiten Schaltkontakt 54 an. Damit liegt die Lastspannung auch an den Erntekondensatoren 65.1 und 65.2 an. Wird nun der Leistungshalbleiter 52 eingeschaltet, so sinkt die Spannung am Leistungshalbleiter 4 auf nahe null ab, wodurch der Erntekondensatoren 65.1 und 65.2 über die zweite Diode 70 bzw. die dritte Diode 76 entladen und die Teilkapazitäten 74 und 75 der Eingangskondensatoranordnung 63 geladen werden. Wird der Leistungshalbleiter 4 wieder eingeschaltet, so werden die Erntekondensatoren 64 über die erste Diode 67 bzw. die vierte Diode 79 wieder aufgeladen.

Ein Überladen der Teilkapazität 74 der Eingangskondensatoranordnung 63 kann durch zeitweises Kurzschließen der ersten Diode 67 vermieden werden.

Ein Überladen der Teilkapazität 75 der Eingangskondensatoranordnung 63 kann durch zeitweises Kurzschließen der der vierten Diode 79 vermieden werden.

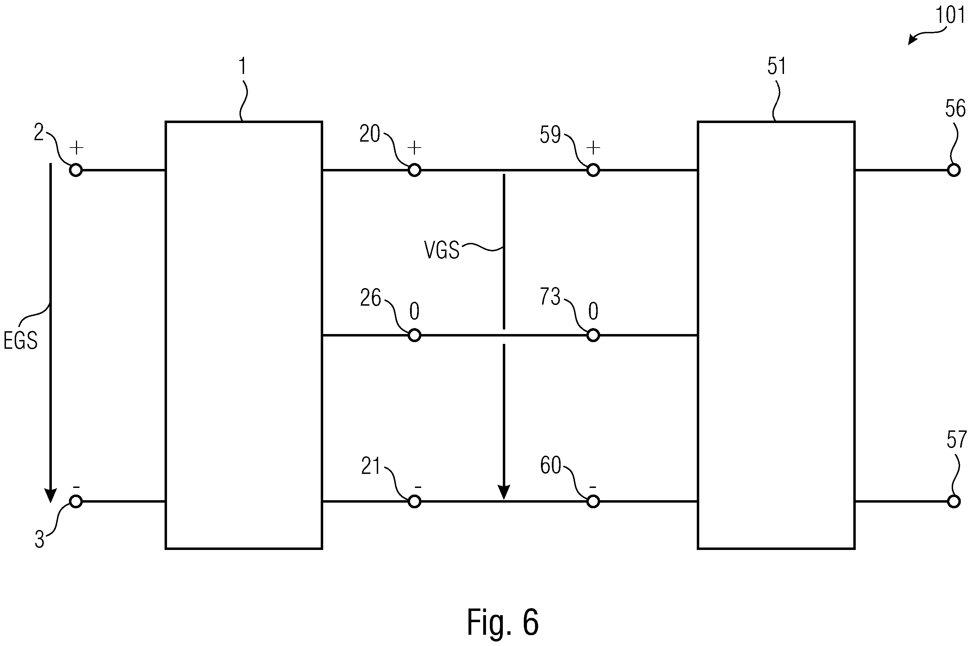

Figur 6 zeigt ein Ausführungsbeispiel einer leistungselektronischen Schaltung 101 in einer schematischen Darstellung. Die leistungselektronische Schaltung 101 umfasst:

eine erfindungsgemäße Gleichspannungsversorgungseinrichtung 1; und

eine erfindungsgemäße Leistungshalbleiterschaltung 51;

wobei der positive Ausgangskontakt 20 mit dem positiven Versorgungsgleichspannungseingang 59 elektrisch verbunden ist; und

wobei der negative Ausgangskontakt 21 mit dem negativen Versorgungsgleichspannungseingang 60 elektrisch verbunden ist.

Die Kombination der erfindungsgemäßen Gleichspannungsversorgungseinrichtung 1 mit der erfindungsgemäßen Leistungshalbleiterschaltung ermöglicht es Energie in galvanisch getrennte Stromkreise zu liefern und die Transferkapazitäten 13, 16 gering zu halten.

Gemäß einer bevorzugten Weiterbildung der Erfindung weist die Gleichspannungsversorgungseinrichtung 1 eine Steuerschaltung zur Erzeugung von Steuersignalen zum Steuern der Treiberschaltung 58 auf, wobei die Steuersignale über den ersten Transferkondensator 13 und den zweiten Transferkondensator 16 an die Treiberschaltung 58 übertragen sind.

Bezugszeichen:

| | |
|---|---|
| 1 | Gleichspannungsversorgungseinrichtung |
| 2 | erster Spannungseingang |
| 3 | zweiter Spannungseingang |
| 4 | Halbleiterschalter |
| 5 | erster Schaltkontakt |
| 6 | zweiter Schaltkontakt |
| 7 | Steuerkontakt |
| 8 | elektrische Kapazität |
| 9 | Transformator |
| 10 | Primärspule |
| 11 | Sekundärspule |
| 12 | Ansteuereinrichtung |
| 13 | erster Transferkondensator |
| 14 | erster Kontakt |
| 15 | zweiter Kontakt |
| 16 | zweiter Transferkondensator |
| 17 | erster Kontakt |
| 18 | zweiter Kontakt |
| 19 | Gleichrichter |
| 20 | positiver Ausgangskontakt |
| 21 | negativer Ausgangskontakt |
| 22 | erster Eingangskontakt |
| 23 | zweiter Eingangskontakt |
| 24 | erster Kontakt |
| 25 | zweiter Kontakt |
| 51 | Leistungshalbleiterschaltung |
| 52 | Leistungshalbleiter |
| 53 | erster Schaltkontakt |
| 54 | zweiter Schaltkontakt |
| 55 | Steuerkontakt |
| 56 | erster Schaltspannungskontakt |
| 57 | zweiter Schaltspannungskontakt |
| 58 | Treiberschaltung |
| 59 | positiver Versorgungsgleichspannungseingang |
| 60 | negativer Versorgungsgleichspannungseingang |

| | |
|---|---|
| 61 | erster Schaltausgang |
| 62 | zweiter Schaltausgang |
| 63 | Eingangskondensatoranordnung |
| 64 | Erntekondensator |
| 65 | erster Anschluss |
| 66 | zweiter Anschluss |
| 67 | erste Diode |
| 68 | Kathode |
| 69 | Anode |
| 70 | zweite Diode |
| 71 | Kathode |
| 72 | Anode |
| 73 | neutraler Versorgungsgleichspannungseingang |
| 74 | erste Teilkapazität |
| 75 | zweite Teilkapazität |
| 76 | dritte Diode |
| 77 | Kathode |
| 78 | Anode |
| 79 | vierte Diode |
| 80 | Kathode |
| 81 | Anode |
| 101 | leistungselektronische Schaltung |

| | |
|---|---|
| EGS | energieliefernden Gleichspannung |
| VGS | Versorgungsgleichspannung |
| WSP | primäre Wechselspannung |
| WSS | sekundäre Wechselspannung |

Quellen:

[1] DE 10 2018 215 097 A1

**Patentansprüche**

1. Gleichspannungsversorgungseinrichtung zum Umwandeln einer energieliefernden Gleichspannung (EGS) in eine von der energieliefernden Gleichspannung (EGS) galvanisch getrennte Versorgungsgleichspannung (VGS), wobei die Gleichspannungsversorgungseinrichtung (1) umfasst:

   einen ersten Spannungseingang (2) und einen zweiten Spannungseingang (3) zum Empfangen der energieliefernden Gleichspannung (EGS);
   einen Halbleiterschalter (4) mit einem ersten Schaltkontakt (5), einem zweiten Schaltkontakt (6) und einem Steuerkontakt (7), wobei zweite Schaltkontakt (6) mit dem zweiten Spannungseingang (3) elektrisch verbunden ist;
   eine elektrische Kapazität (8), welche zwischen dem ersten Schaltkontakt (5) und dem zweiten Schaltkontakt (6) wirkt;
   einen Transformator (9) mit einer Primärspule (10) und mit einer Sekundärspule (11), wobei die Primärspule (10) den ersten Spannungseingang (2) mit dem ersten Schaltkontakt (5) elektrisch verbindet;

eine Ansteuereinrichtung (12) zum Ansteuern des Steuerkontakts (7), wobei die Ansteuereinrichtung (12) so ausgebildet ist, dass der Halbleiterschalter (4) schwingt, so dass an der Primärspule (10) eine resonante primäre Wechselspannung (WSP) und an der Sekundärspule (11) eine sekundäre Wechselspannung (WSS) anliegt;

einen ersten Transferkondensator (13) mit einem ersten Kontakt (14) und einem zweiten Kontakt (15) sowie einen zweiten Transferkondensator (16) mit einem ersten Kontakt (17) und einem zweiten Kontakt (18);

einen Gleichrichter (19) mit einem positiven Ausgangskontakt (20) und einem negativen Ausgangskontakt (21) zum Bereitstellen der Versorgungsgleichspannung (VGS), und mit einem ersten Eingangskontakt (22) und einem zweiten Eingangskontakt (23);

wobei der erste Kontakt (14) des ersten Transferkondensators (13) elektrisch mit dem ersten Eingangskontakt (22) des Gleichrichters (19) verbunden ist, wobei der erste Kontakt (17) des zweiten Transferkondensators (16) elektrisch mit dem zweiten Eingangskontakt (23) des Gleichrichters (19) verbunden ist, wobei der zweite Kontakt (18) des zweiten Transferkondensators (16) elektrisch mit einem ersten Kontakt (24) der Sekundärspule (11) verbunden ist;

wobei der zweite Kontakt (15) des ersten Transferkondensators (13) elektrisch mit einem zweiten Kontakt (25) der Sekundärspule (11) verbunden ist, oder

wobei der zweite Kontakt (15) des ersten Transferkondensators (13) elektrisch mit dem ersten Schaltkontakt (5) und der zweite Schaltkontakt (6) mit einem zweiten Kontakt (25) der Sekundärspule (11) verbunden sind;

wobei ein magnetischer Kopplungsfaktor des Transformators (9), eine Kapazität des ersten Transferkondensators (13), eine Kapazität des zweiten Transferkondensators (16) und eine Induktivität der Sekundärspule (11) so gewählt sind, dass die sekundäre Wechselspannung (WSS) eine Resonanzüberhöhung aufweist.

2. Gleichspannungsversorgungseinrichtung nach vorstehendem Anspruch, wobei der magnetische Kopplungsfaktor des Transformators (9) zwischen 0,2 und 0,8, bevorzugt zwischen 0,3 und 0,7, besonders bevorzugt zwischen 0,4 und 0,6 liegt.

3. Gleichspannungsversorgungseinrichtung nach Anspruch 1 oder 2, wobei der Transformator (9) eisenlos ausgeführt ist.

4. Gleichspannungsversorgungseinrichtung nach einem der vorstehenden Ansprüche, wobei die Ansteuereinrichtung (12) so ausgebildet ist, dass der Halbleiterschalter (4) mit einer Frequenz von mindestens 50 MHz, bevorzugt von mindestens 100 MHz, besonders bevorzugt von mindestens 150 MHz, schwingt.

5. Gleichspannungsversorgungseinrichtung nach einem der vorstehenden Ansprüche, wobei der erste Transferkondensator (13) und der zweite Transferkondensator (16) jeweils eine Kapazität von höchstens 10 pF, bevorzugt von höchstens 5 pF, besonders bevorzugt von höchstens 2 pF, aufweisen.

6. Gleichspannungsversorgungseinrichtung nach einem der vorstehenden Ansprüche, wobei die Primärspule (10) und die Sekundärspule (11) galvanisch voneinander getrennt sind.

7. Gleichspannungsversorgungseinrichtung nach einem der vorstehenden Ansprüche, wobei der Gleichrichter (19) einen neutralen Ausgangskontakt (26) aufweist.

8. Leistungshalbleiterschaltung, wobei die Leistungshalbleiterschaltung (51) umfasst:

einen Leistungshalbleiter (52) mit einem ersten Schaltkontakt (53), einem zweiten Schaltkontakt (54) und einem Steuerkontakt (55), wobei der erste Schaltkontakt (53) des Leistungshalbleiters (52) mit einem ersten Schaltspannungskontakt (56) elektrisch verbunden ist und wobei der zweite Schaltkontakt (54) des Leistungshalbleiters (52) mit einem zweiten Schaltspannungskontakt (57) elektrisch verbunden ist;

eine Treiberschaltung (58) mit einem positiven Versorgungsgleichspannungseingang (59) und einem negativen Versorgungsgleichspannungseingang (60) zum Empfangen einer potentialfreien Versorgungsgleichspannung (VGS), wobei ein erster Schaltausgang (61) der Treiberschaltung (58) mit dem Steuerkontakt (55) des Leistungshalbleiters (52) elektrisch verbunden ist, und wobei ein zweiter Schaltausgang (62) der Treiberschaltung (58) mit dem zweiten Schaltkontakt (54) des Leistungshalbleiters (52) elektrisch verbunden ist;

eine Eingangskondensatoranordnung (63), welcher zwischen dem positiven Versorgungsgleichspannungseingang (59) und dem negativen Versorgungsgleichspannungseingang (60) wirkt;

ein oder mehrere Erntekondensatoren (64), welche jeweils einen ersten Anschluss (65) und einen zweiten Anschluss (66) aufweisen, wobei der erste Anschluss (65) jeweils mit dem ersten Schaltkontakt (53) elektrisch verbunden ist;

eine erste Diode (67) mit einer Kathode (68) und einer Anode (69), wobei die Kathode (68) der ersten Diode (67) mit dem positiven Versorgungsgleichspannungseingang (59) elektrisch verbunden ist und wobei die Anode (69) der ersten Diode (67) mit dem zweiten Anschluss (66) eines der Erntekondensatoren (64) elektrisch verbunden ist;

eine zweite Diode (70) mit einer Kathode (71) und einer Anode (72), wobei die Anode (72) der zweiten Diode (70) mit dem negativen Versorgungsgleichspannungseingang (60) elektrisch verbunden ist und wobei die Kathode (71) der zweiten Diode (70) mit dem zweiten Anschluss (66) eines der Erntekondensatoren (64) elektrisch verbunden ist.

9. Leistungshalbleiterschaltung nach Anspruch 8, wobei die erste Diode (67) und die zweite Diode (70) mit einem selben der ein oder mehreren Erntekondensatoren (64) elektrisch verbunden sind.

10. Leistungshalbleiterschaltung nach Anspruch 8 oder 9, wobei die erste Diode (67) und/oder die zweite Diode (70) als parasitäre Diode eines schaltbaren Halbleiterbauelements ausgebildet ist.

11. Leistungshalbleiterschaltung nach einem der Ansprüche 8 bis 10, wobei die Treiberschaltung (58) einen neutralen Versorgungsgleichspannungseingang (73) aufweist, wobei eine Mittenanzapfung der Eingangskondensatoranordnung (63) mit dem neutralen Versorgungsgleichspannungseingang (73) elektrisch verbunden ist, so dass eine erste Teilkapazität (74) der Eingangskondensatoranordnung (63) zwischen dem positiven Versorgungsgleichspannungseingang (59) und dem neutralen Versorgungsgleichspannungseingang (73) wirkt und dass eine zweite Teilkapazität (75) der Eingangskondensatoranordnung (63) zwischen dem negativen Versorgungsgleichspannungseingang (60) und dem neutralen Versorgungsgleichspannungseingang (73) wirkt.

12. Leistungshalbleiterschaltung nach Anspruch 11, wobei die Leistungshalbleiterschaltung (58) eine dritte Diode (76) mit einer Kathode (77) und einer Anode (78) aufweist, wobei die Anode (78) der dritten Diode (76) mit dem neutralen Versorgungsgleichspannungseingang (73) elektrisch verbunden ist und wobei die Kathode (77) der dritten Diode (76) mit dem zweiten Anschluss (66) eines der Erntekondensatoren (64) elektrisch verbunden ist; und wobei die Leistungshalbleiterschaltung (58) eine vierte Diode (79) mit einer Kathode (80) und einer Anode (81) aufweist, wobei die Kathode (80) der vierten Diode (79) mit dem neutralen Versorgungsgleichspannungseingang (73) elektrisch verbunden ist und wobei die Anode (81) der vierten Diode (79) mit dem zweiten Anschluss (66) eines der Erntekondensatoren (64) elektrisch verbunden ist.

13. Leistungshalbleiterschaltung nach Anspruch 12, wobei die ein oder mehrere Erntekondensatoren (64) einen ersten Erntekondensator (64.1) und einen zweiten Erntekondensator (64.2) umfassen;

wobei die erste Diode (67) und die dritte Diode (76) mit dem ersten Erntekondensator (64.1) elektrisch verbunden sind; und wobei die zweite Diode (70) und die vierte Diode (79) mit dem zweiten Erntekondensator (64.2) elektrisch verbunden sind.

14. Leistungshalbleiterschaltung nach Anspruch 13, wobei wenigstens eine der mit dem ersten Erntekondensator (64.1) elektrisch verbundenen Dioden (67, 76) als parasitäre Diode eines schaltbaren Halbleiterbauelements ausgebildet ist; und wobei wenigstens eine der mit dem zweiten Erntekondensator (64.2) elektrisch verbundenen Dioden (70, 79) als parasitäre Diode eines schaltbaren Halbleiterbauelements ausgebildet ist.

15. Leistungselektronische Schaltung umfassend:

eine Gleichspannungsversorgungseinrichtung (1) nach einem der Ansprüche 1 bis 7; und eine Leistungshalbleiterschaltung (51) nach einem der Ansprüche 8 bis 14; wobei der positive Ausgangskontakt (20) mit dem positiven Versorgungsgleichspannungseingang (59) elektrisch verbunden ist; und wobei der negative Ausgangskontakt (21) mit dem negativen Versorgungsgleichspannungseingang (60) elektrisch verbunden ist.

16. Leistungselektronische Schaltung nach vorstehendem Anspruch, wobei die Gleichspannungsversorgungseinrichtung (1) eine Steuerschaltung zur Erzeugung von Steuersignalen zum Steuern der Treiberschaltung (58) aufweist, wobei die Steuersignale über den ersten Transferkondensator (13) und den zweiten Transferkondensator (16) an die Treiberschaltung (58) übertragen sind.

Fig. 1

EP 4 492 660 A1

Fig. 2

Fig. 3

EP 4 492 660 A1

Fig. 4

Fig. 5

EP 4 492 660 A1

Fig. 6

Europäisches
Patentamt

European
Patent Office

Office européen
des brevets

# EUROPÄISCHER RECHERCHENBERICHT

**Nummer der Anmeldung**

EP 24 18 7675

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/226549 A1 (JITARU IONEL [US]) 22. Juli 2021 (2021-07-22) * Absatz [0100] - Absatz [0106]; Abbildungen 16-18 * | 1-16 | INV. H02M1/00 H02M1/08 H02M3/00 H02J50/12 |
| A | US 2009/184950 A1 (FURUTA FUTOSHI [JP] ET AL) 23. Juli 2009 (2009-07-23) * Absätze [0022], [0042] - Absatz [0044]; Abbildung 6B * | 1-16 | H02M3/335 |
| A | DE 10 2018 215097 A1 (FRAUNHOFER GES FORSCHUNG [DE]) 5. März 2020 (2020-03-05) * Abbildungen 1-5 * | 1-16 | |
| X | DE 198 41 733 A1 (SIEMENS AG [DE]) 16. März 2000 (2000-03-16) | 8-16 | |
| A | * Abbildung 1 * | 1-7 | |

**RECHERCHIERTE SACHGEBIETE (IPC)**

H02M
H02J

Der vorliegende Recherchenbericht wurde für alle Patentansprüche erstellt

| Recherchenort | Abschlußdatum der Recherche | Prüfer |
|---|---|---|
| Den Haag | 29. November 2024 | Zeljkovic, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 24 18 7675

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-16

   DC/DC Wandler und Gate-Treiber

1.1. Ansprüche: 1-7

   Ein isolierter resonanter DC/DC-Wandler, der sowohl einen Transformator als auch zwei Isolationskondensatoren umfasst, die in Reihe mit Anschlüssen einer Sekundärwicklung des Transformators geschaltet sind. Die Kapazitätswerte der Kondensatoren werden so ausgewählt, dass sie mit den Parasiten des Transformators die gewünschte Resonanzfrequenz erreichen.

1.2. Ansprüche: 8-16

   Eine Gate-Treiberschaltung für einen Halbleiterschalter und der Schalter mit einem Clamp für den Schalter, die einen Erntekondensator umfasst, der die Energie aus einer parasitären Kapazität des Schalters zurückgewinnt und in den Gate-Treiber-Versorgungskondensator zurückführt.

   - - -

Bitte zu beachten dass für alle unter Punkt 1 aufgeführten Erfindungen, obwohl diese nicht unbedingt durch ein gemeinsames erfinderisches Konzept verbunden sind, ohne Mehraufwand der eine zusätzliche Recherchengebühr gerechtfertigt hätte, eine vollständige Recherche durchgeführt werden konnte.

# EP 4 492 660 A1

## ANHANG ZUM EUROPÄISCHEN RECHERCHENBERICHT
## ÜBER DIE EUROPÄISCHE PATENTANMELDUNG NR.

EP 24 18 7675

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2024

| Im Recherchenbericht angeführtes Patentdokument | Datum der Veröffentlichung | Mitglied(er) der Patentfamilie | Datum der Veröffentlichung |
|---|---|---|---|
| US 2021226549 A1 | 22-07-2021 | US 2020169180 A1<br>US 2021226549 A1 | 28-05-2020<br>22-07-2021 |
| US 2009184950 A1 | 23-07-2009 | CN 101494037 A<br>JP 2009169327 A<br>US 2009184950 A1 | 29-07-2009<br>30-07-2009<br>23-07-2009 |
| DE 102018215097 A1 | 05-03-2020 | DE 102018215097 A1<br>EP 3621178 A1 | 05-03-2020<br>11-03-2020 |
| DE 19841733 A1 | 16-03-2000 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018215097 A1